Europäisches Patentamt

(19) European Patent Office

Office européen des brevets

(11) Numéro de publication : **0 143 770**
**B1**

(12) FASCICULE DE BREVET EUROPÉEN

(45) Date de publication du fascicule du brevet :
23.03.88

(51) Int. Cl.⁴ : **D 01 H   9/04, B 65 G   47/90**

(21) Numéro de dépôt : 84870136.3

(22) Date de dépôt : 18.09.84

(54) Procédé et appareillage pour le remplacement des bobines pleines sur un métier à filer continu.

(30) Priorité : 19.09.83 BE 211546

(43) Date de publication de la demande :
05.06.85 Bulletin 85/23

(45) Mention de la délivrance du brevet :
23.03.88 Bulletin 88/12

(84) Etats contractants désignés :
DE FR GB IT

(56) Documents cités :
EP-A- 0 124 662
DE-A- 2 430 545
FR-A- 1 221 486
FR-A- 2 137 644

(73) Titulaire : **Société Anonyme des Ateliers Houget
Duesberg Bosson
Rue Fernand Houget, 2
B-4800 Verviers (BE)**

(72) Inventeur : **Lousberg, Pierre
Rue Thiniheid, 50
B-4801 Stembert (BE)**

(74) Mandataire : **Overath, Philippe et al
Cabinet Bede 13, Avenue Antoine Depage
B-1050 Bruxelles (BE)**

Jouve, 18, rue St-Denis, 75001 Paris, France

## Description

La présente invention se rapporte aux métiers à filer dits « continu à filer » et concerne un procédé et un appareillage pour le remplacement des bobines pleines se trouvant sur les broches d'un métier continu à filer par des tubes vides se trouvant sur des brochettes fixes placées à proximité des broches.

Ainsi que cela est bien connu, toute machine dite « continu à filer » comporte les éléments suivants :

- une broche verticale en rotation sur laquelle est enfilé un tube de carton ou de plastique sur lequel le fil est enroulé :

- un anneau sur lequel glisse un curseur et qui se déplace le long du tube dans un mouvement de va-et-vient pour répartir les spires de fil sur toute la longueur du tube.

Le fil, en provenance de cylindres délivreurs, passe dans le curseur et est enroulé sur le tube.

Lorsque le tube est suffisamment recouvert de fil, on obtient une bobine, qu'il faut enlever de la broche alors arrêtée et déposer sur une brochette prévue à cet effet ou dans un chariot. On peut alors replacer un tube sur la broche et recommencer une autre bobine.

L'enlèvement de la bobine et le placement du tube ont d'abord été effectués manuellement.

Puis des dispositifs automatiques sont apparus de façon à réduire les temps de manipulations ainsi que les travaux lourds et répétitifs.

Un tel dispositif est décrit et illustré par le document FR-A-2 137 644. Il s'agit d'un appareil échangeur de tubes comportant un transporteur de tubes le long d'un trajet entre une broche et un organe de maintien, des organes de levée montés sur un chariot mobile monté sur le transporteur et un dispositif d'entraînement pour déplacer sélectivement le chariot dans le sens de sa longueur de sorte qu'une première rangée d'organes enlèvent les tubes pleins des broches pour les placer au-dessus des organes de maintien du convoyeur et d'autre part qu'une seconde rangée d'organes enlèvent les tubes-vides des organes de maintien pour les embrocher.

Les bobines pleines et les tubes vides sont enlevés et replacés en phases successives, d'où mécanisme de transfert compliqué, ainsi que temps de transfert et d'arrêt de la machine important. D'autre part, comme les tubes vides sont maintenus dans l'alignement et entre les bobines pleines, la distance entre les bobines est assez importante et ne peut pas être réduite.

La présente invention vise à automatiser le remplacement des bobines pleines par des tubes vides sur une machine comportant un certain nombre de broches alignées entre elles avec des distances réduites au moyen d'un mécanisme simple et efficace pouvant effectuer le remplacement de manière très rapide.

Lorsque les bobines sont terminées, la situation se présente comme suit :

- la bobine pleine se trouve verticalement sur la broche.

- un tube vide se trouve verticalement sur la brochette pour tube de remplacement, cette brochette se trouvant elle-même à une certaine distance devant la broche, éventuellement légèrement décalée par rapport à celle-ci, donc en fait entre la broche considérée et la broche suivante.

Pratiquement le problème de l'invention est de retirer la bobine pleine de la broche, de retirer le tube vide de la brochette et de permuter la bobine pleine et le tube vide, de façon à placer le tube vide sur la broche et la bobine pleine sur la brochette.

Certains phénomènes doivent être pris en considération mais il n'en sera pas tenu compte ici, car les dispositifs utilisés pour résoudre ces difficultés ne font pas partie de l'invention.

Ainsi :

- la bobine pleine est serrée sur la broche de par la déformation du tube en carton ou en plastique sous l'effet de la tension avec laquelle le fil a été bobiné. Il faut donc d'abord décaler la bobine et on la supposera décalée.

- le fil en provenance des cylindres délivreurs et enroulé sur la bobine doit être coupé pour permettre l'évacuation de la bobine pleine et son remplacement par le tube vide. On supposera le fil coupé.

En vue de la solution du problème la présente invention se distingue particulièrement par les caractéristiques essentielles telles que reprises dans les revendications 1 à 10.

En pratique différentes considérations doivent être envisagées de même que différentes caractéristiques de réalisation faisant également partie de l'invention.

En effet, il y a lieu de saisir la bobine pleine qui se trouve sur la broche et l'extraire de la broche en la soulevant verticalement de manière suffisante pour que la bobine pleine soit entièrement dégagée de la broche.

De la même façon, il faut saisir le tube vide et le soulever verticalement de manière suffisante pour que le tube vide soit entièrement dégagé de la brochette, mais également pour que l'extrémité basse du tube vide soit plus élevée que l'extrémité haute de la broche.

Conformément à l'invention, la bobine pleine et le tube vide sont saisis par les pinces mécaniques ou pneumatiques qui agissent sur l'intérieur ou l'extérieur de la bobine ou du tube. Ces pinces peuvent se déplacer verticalement dans l'axe de la broche et de la brochette respectivement.

On décrira ci-après une première forme de réalisation de l'invention afin de montrer les principes sur lesquels est basée l'invention en se référant aux figures 1 à 13.

Sur ces dessins :

Les figures 1, 2, 3, 4 montrent le dispositif à pinces et les broches et brochettes dans quatre positions de filage consécutives.

Les figures 5, 6, 7, 8, 9, 10 montrent également quatre positions de filage mais en liaison avec le dispositif mécanique destiné à commander le passage d'une position à l'autre.

Les figures 11, 12, 13 sont relatives à ce dispositif mécanique.

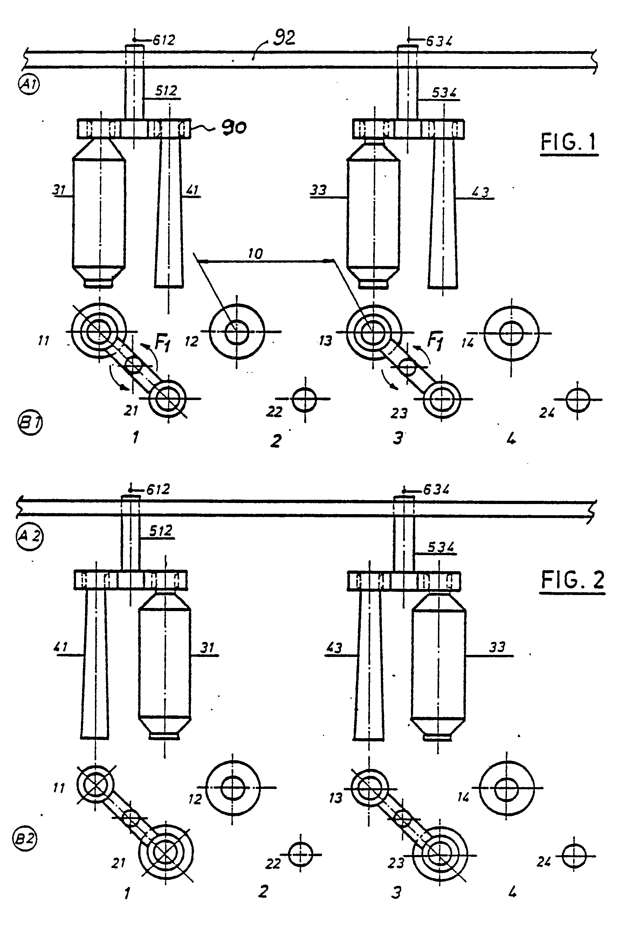

Sur les figures 1, 2, 3, 4 des dessins ci-joints, on a représenté en 1, 2, 3, 4 quatre positions de filage consécutives :

11-12-13-14 est la position des broches correspondantes,

21-22-23-24 est la position des brochettes correspondantes,

31-32-33-34 représentent les bobines pleines correspondantes,

41-42-43-44 représentent les tubes vides correspondants,

512-534 représentent les dispositifs à pinces correspondant aux positions de filage 1, 2, 3, 4,

10 est la valeur de l'écartement.

Sur les figures 1, 2, 3, 4 on a montré chaque fois la situation correspondante de quatre positions de filage, en vue en élévation A et en vue en plan B.

Les figures 1, 2, 3, 4 montrent les positions successives des différents éléments.

A1-B1 : à la position de filage 1, le dispositif à pinces 512 vient de dégager la bobine pleine 31 de la broche 11 et le tube vide 41 de la brochette 21. La situation est la même à la position de filage 3.

Les dispositifs à pinces 512 et 534 sont prêts à exécuter une rotation de 180 degrés autour des axes 612 et 634 dans le sens des flèches F₁.

A2-B2 : à la position de filage 1, la rotation a eu lieu et le dispositif à pinces 512 peut enfiler la bobine pleine 31 sur la brochette 21 et le tube vide 41 sur la broche 11. La situation est la même à la position de filage 3.

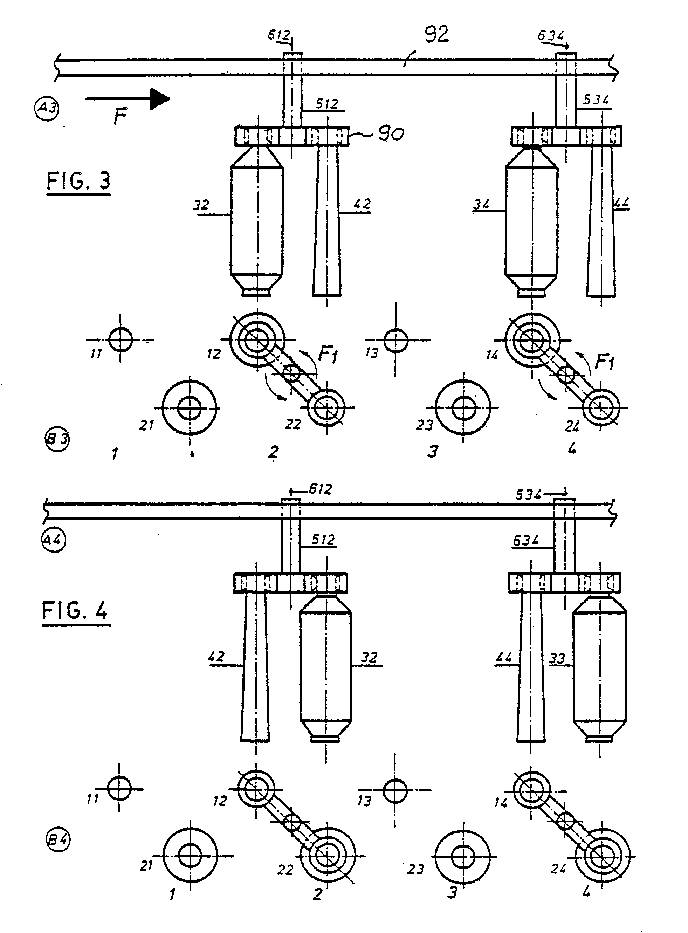

A3-B3 : l'enfilage dont question ci-dessus a eu lieu et les dispositifs à pinces 512 et 534 se sont déplacés de la valeur d'un écartement 10 dans le sens de la flèche F de façon que le dispositif 512 s'est placé à la position de filage 2 et le dispositif 534 à la position de filage 4. Le dispositif à pinces 512 vient de dégager la bobine 32 de la broche 12 et le tube vide 42 de la brochette 22. La situation est la même à la position de filage 4. Les dispositifs à pinces 512 et 534 sont prêts à exécuter une rotation de 180 degrés autour des axes 612 et 634 dans le sens des flèches F₁ (figure 3).

A4-B4 : à la position de filage 2, la rotation a eu lieu et le dispositif à pinces 512 peut enfiler la bobine 32 sur la brochette 22 et le tube vide 42 sur la broche 12. La situation est la même à la position de filage 4. Après cet enfilage, les dispositifs 512 et 534 reviendront aux positions de filage 1 et 3 pour préparer l'enlèvement suivant des bobines.

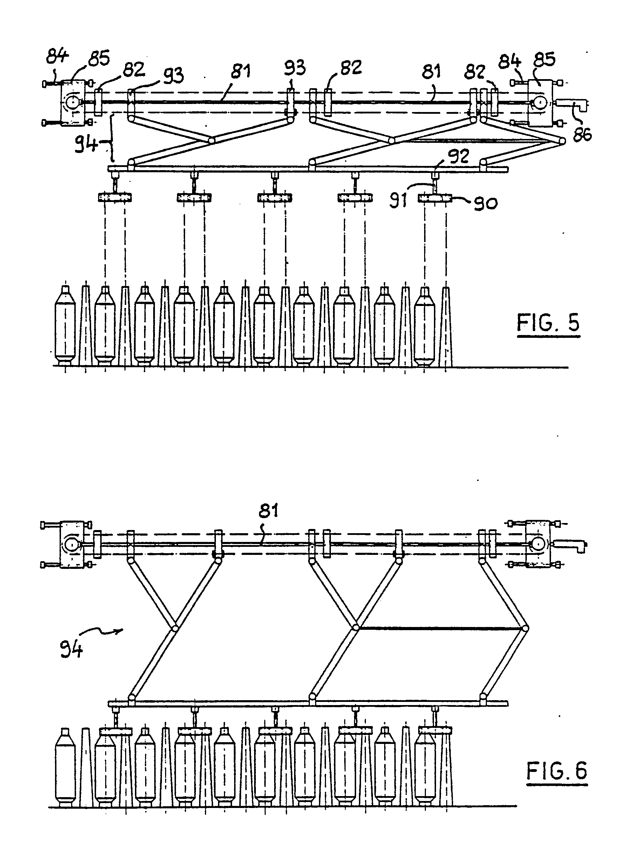

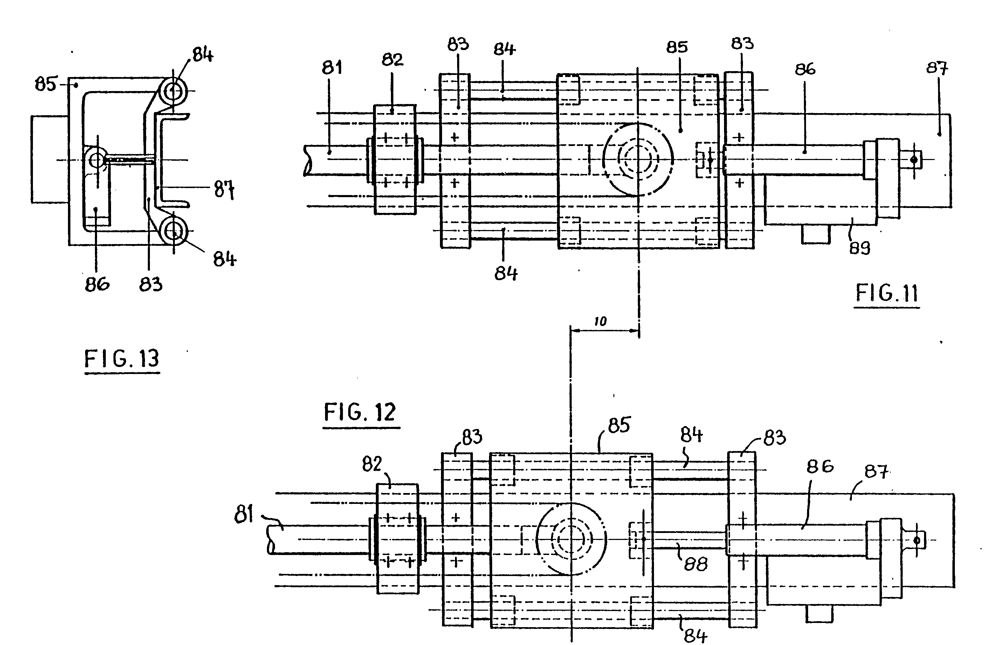

Le dispositif à pinces comprend un axe horizontal 81 qui soutient tout le dispositif (figures 5-11).

Cet axe 81 peut se déplacer longitudinalement dans des paliers 82 fixés à une cornière fixe 87. Il est solidaire d'un chariot 85 qui peut lui-même coulisser dans des axes-guides 84 eux-mêmes fixés à la cornière 87 par des supports 83.

Un vérin électrique 86 ou un autre dispositif a sa tige mobile 88 fixée au chariot 85 et sa partie fixe 89 solidaire de la cornière 87.

Suivant que le vérin électrique 86 est alimenté ou non, le chariot 85 se déplacera dans un sens ou dans l'autre sur les axes-guides 84 en entraînant également l'axe 81 et tout le dispositif à pinces.

Les pinces 90 sont fixées par des tiges 91 à une barre 92 disposée horizontalement.

Sur l'axe 81 sont fixés des plateaux 93 qui servent de supports à un système de tringlage 94 en liaison avec la barre 92 et constitué d'éléments destinés à permettre le fonctionnement ci-après de l'ensemble.

Si l'on se réfère aux figures 5-10 :

Figure 5 : position de départ

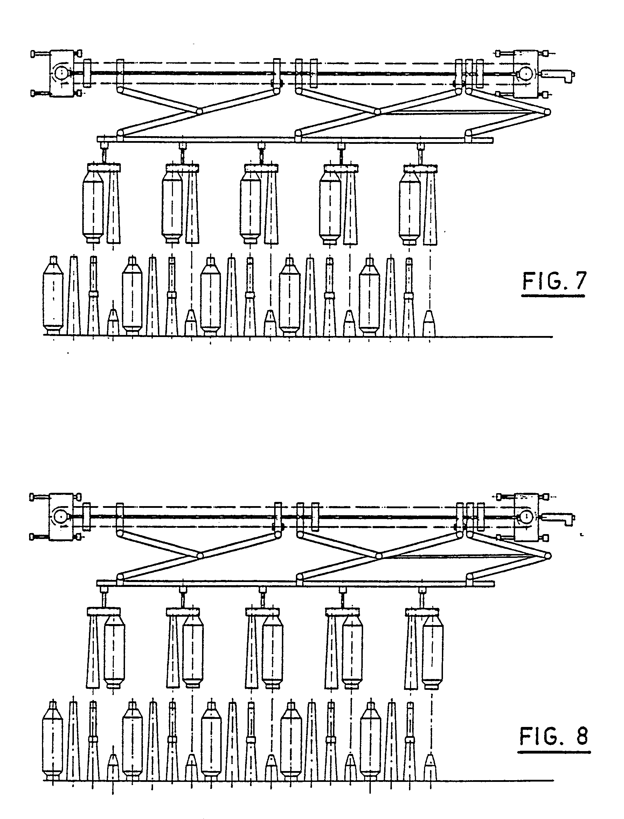

Figure 6 : le dispositif à pinces descend sur les bobines pleines et tubes vides de rang impair (en comptant à partir de la droite)

Figure 7 : le dispositif à pinces soulève ces bobines pleines et tubes vides

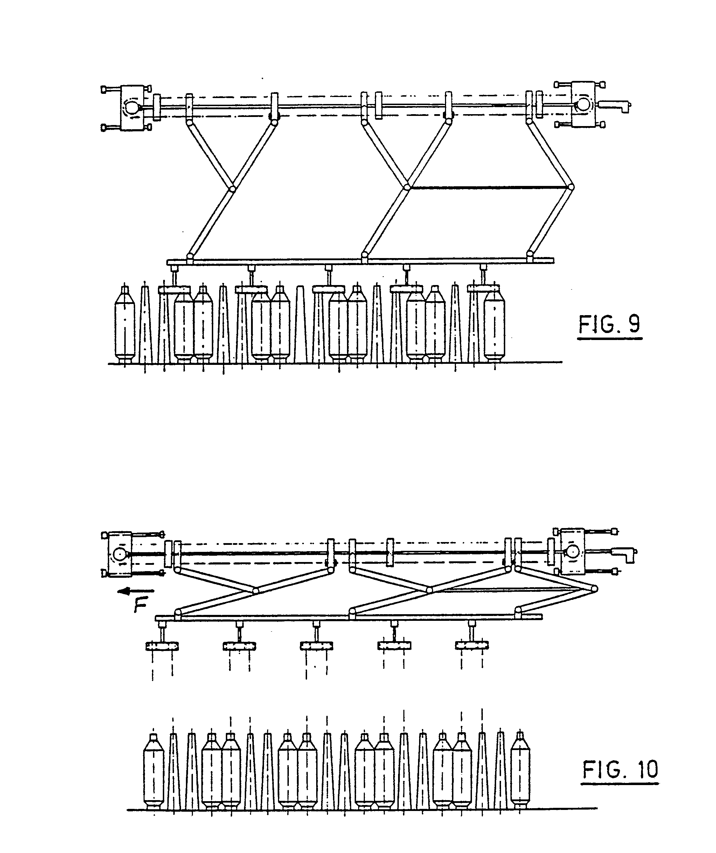

Figure 8 : la rotation a eu lieu

Figure 9 : le dispositif à pinces redescend les bobines pleines et tubes vides, respectivement permutés

Figure 10 : le dispositif à pinces s'est relevé, s'est déplacé d'un écartement 10 vers la gauche et est prêt à effectuer la même opération pour les positions de rang pair.

Les pinces peuvent être tout système de préhension existant.

Comme déjà dit ci-dessus, la réalisation ci-dessus est une réalisation de principe.

Toutefois l'invention trouve son application la plus avantageuse dans une réalisation préférentielle dans laquelle on prévoit des moyens par lesquels les bobines pleines et les tubes vides de deux positions de filage consécutives sont enlevés simultanément des broches ou respectivement des brochettes et sont replacés simultanément sur les brochettes ou respectivement sur les broches.

Dans une telle réalisation un dispositif à pinces est prévu pour chaque groupe de deux positions de filage (une position impaire et la position paire qui la suit). Un tel dispositif à pinces comporte donc quatre pinces distinctes, la première pour prendre la bobine pleine de la position de filage impaire, la deuxième pour prendre le tube vide de la position de filage impaire, la troisième pour prendre la bobine pleine de la position de filage paire et la quatrième pour prendre le tube vide de la position de filage paire.

On appellera dans la suite un tel dispositif « dispositif quadruple ».

Lorsque le dispositif quadruple a soulevé les deux bobines pleines et les deux tubes vides suffisamment haut, comme décrit ci-dessus, on fait tourner les quatre pinces simultanément autour d'un axe vertical passant par le centre du parallélogramme délimité par les points d'intersection avec un plan horizontal des axes des deux broches et des deux brochettes auxquelles le dispositif quadruple se rapporte.

Après avoir fait faire aux quatre pinces, et donc aux bobines et aux tubes qu'elles ont saisis respectivement, un demi-tour, les deux bobines pleines se trouvent à l'endroit où se trouvaient les deux tubes vides avant la rotation et inversement.

Si l'on fait subir alors au dispositif quadruple un mouvement vertical vers le bas exactement inverse de celui qu'il avait effectué pour extraire les bobines des broches et les tubes des brochettes, on enfile alors les bobines pleines sur les brochettes et les tubes vides sur les broches.

L'opération de permutation des bobines et des tubes est alors terminée.

Il faut remarquer que par les mouvements décrits ci-dessus, la bobine pleine de la position de filage impaire est déposée sur la brochette de la position de filage paire, et inversement ; de même le tube vide de la position de filage impaire est déposé sur la broche de la position de filage paire, et inversement. Cette inversion supplémentaire n'est pas gênante, toutes les positions de filage étant identiques.

Néanmoins, une autre difficulté doit être prise en considération.

Tout continu à filer comporte un certain nombre de broches verticales parallèles alignées suivant une droite horizontale qui définit l'axe longitudinal de la machine. Chaque broche est séparée de la suivante et de la précédente par une distance fixe. La distance entre les axes verticaux de deux broches consécutives est appelée l'écartement du continu à filer. Cet écartement est maintenu aussi petit que possible pour diminuer l'encombrement de la machine, mais il doit néanmoins être supérieur au diamètre maximum de la bobine pleine. Dans la suite, le mot broche définira la pièce mécanique et les mots « position de filage » définiront l'emplacement physique de la broche.

L'écartement du continu à filer n'est pas suffisamment grand pour que, lors de la rotation d'un demi-tour décrite ci-dessus, les deux bobines et les deux tubes restent toujours compris, dans leur mouvement, à l'intérieur d'une distance, considérée dans l'axe longitudinal de la machine, égale à deux fois l'écartement.

Afin d'éviter que lors de leur rotation simultanée, la bobine pleine de la position de filage impaire d'un dispositif quadruple ne vienne percuter le tube vide de la position de filage paire du dispositif quadruple précédent et afin d'éviter que le tube vide de la position de filage paire du dispositif quadruple ne vienne percuter la bobine pleine de la position de filage impaire du dispositif quadruple suivant, il est indispensable et cela conformément à l'invention, de provoquer un décalage dans la rotation du dispositif quadruple et des dispositifs quadruples précédent et suivant.

A cet effet, il est prévu une commande pour la rotation des dispositifs quadruples de rang impair et une commande distincte pour la rotation des dispositifs quadruples de rang pair. Ces commandes sont agencées de telle façon que :

- d'une part le sens de la rotation des dispositifs quadruples de rang pair soit inverse de celui des dispositifs quadruples de rang impair.

- d'autre part la rotation des dispositifs quadruples de rang impair se réalise avec un certain retard sur la rotation des dispositifs de rang pair, retard que l'on appellera par après « déphasage ».

L'effet conjugué de ces deux moyens provoque entre les bobines pleines et les tubes vides de deux dispositifs quadruples consécutifs un effet « d'engrenage », de telle sorte que l'interpénétration des mouvements se fait sans collision entre les bobines et les tubes des dispositifs voisins. La valeur du déphasage doit évidemment être réglée en fonction de l'écartement et des diamètres du tube et de la bobine.

Lorsque les bobines pleines sont placées sur les brochettes et les tubes vides sur les broches, les dispositifs quadruples subissent une nouvelle rotation d'un demi-tour, à vide, pour reprendre leur place initiale et être prêts pour une prochaine opération.

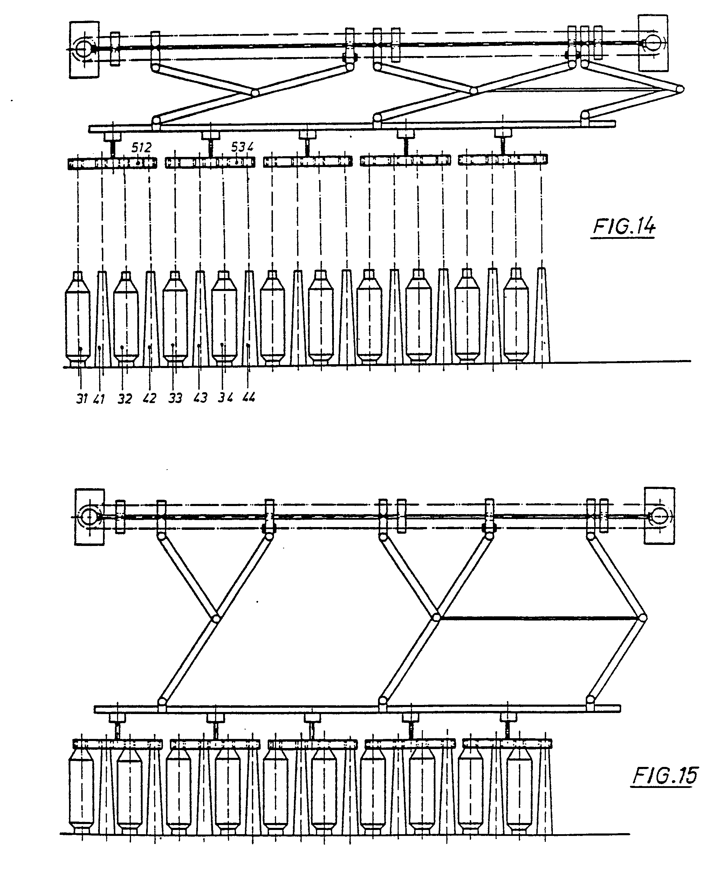

En se référant aux dessins annexés (fig. 14) on donnera un exemple de réalisation pratique de cette réalisation avantageuse.

Sur ces dessins :

Les figures 14 à 19 montrent le fonctionnement du système suivant des vues en élévation.

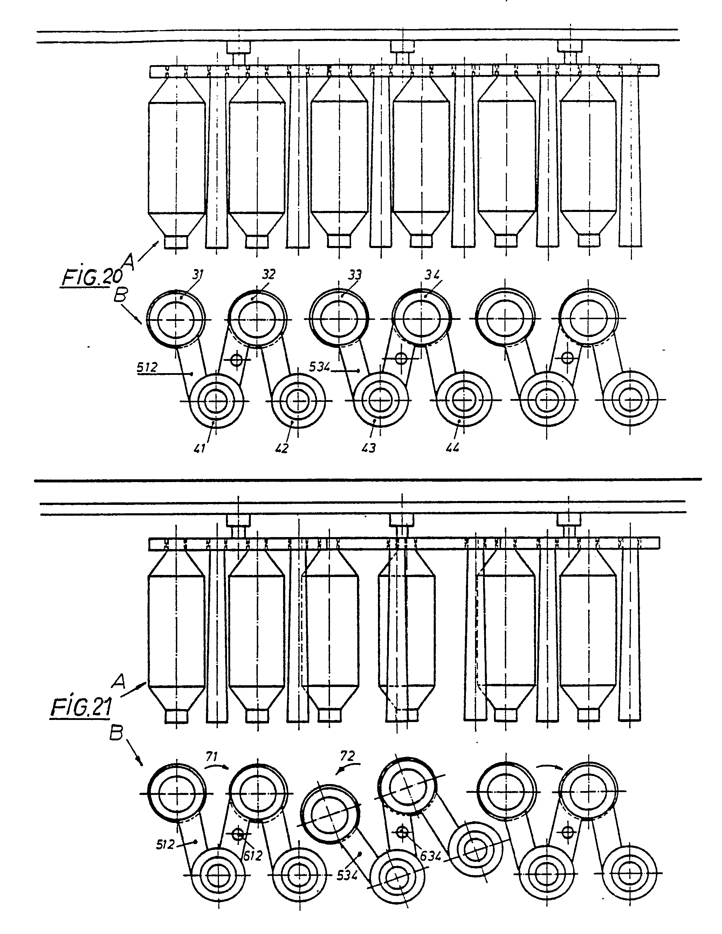

Les figures 20 à 24 montrent la rotation des dispositifs quadruples suivant des vues en élévation et en plan.

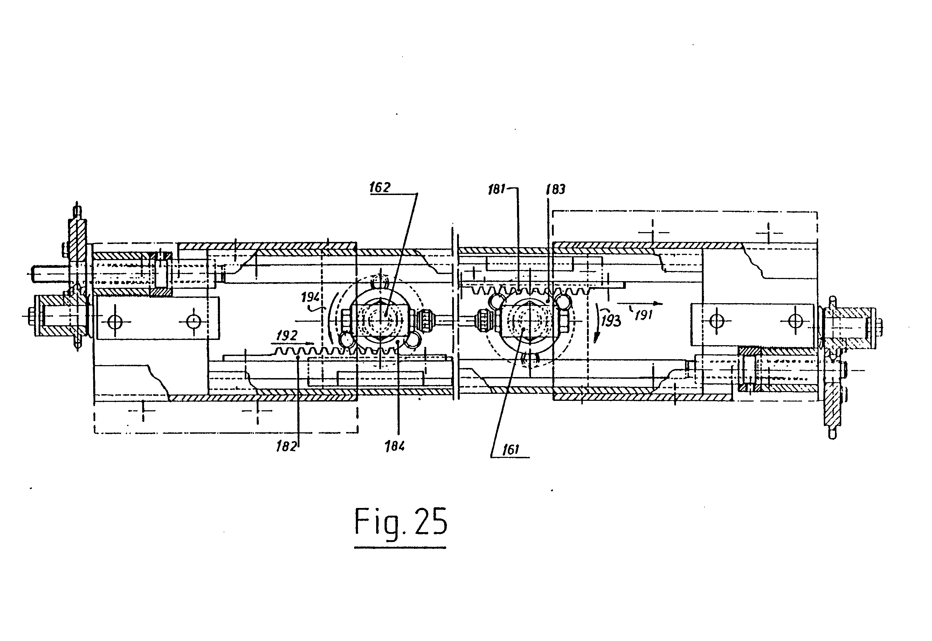

La figure 25 montre le système par lequel est obtenue la rotation des dispositifs quadruples.

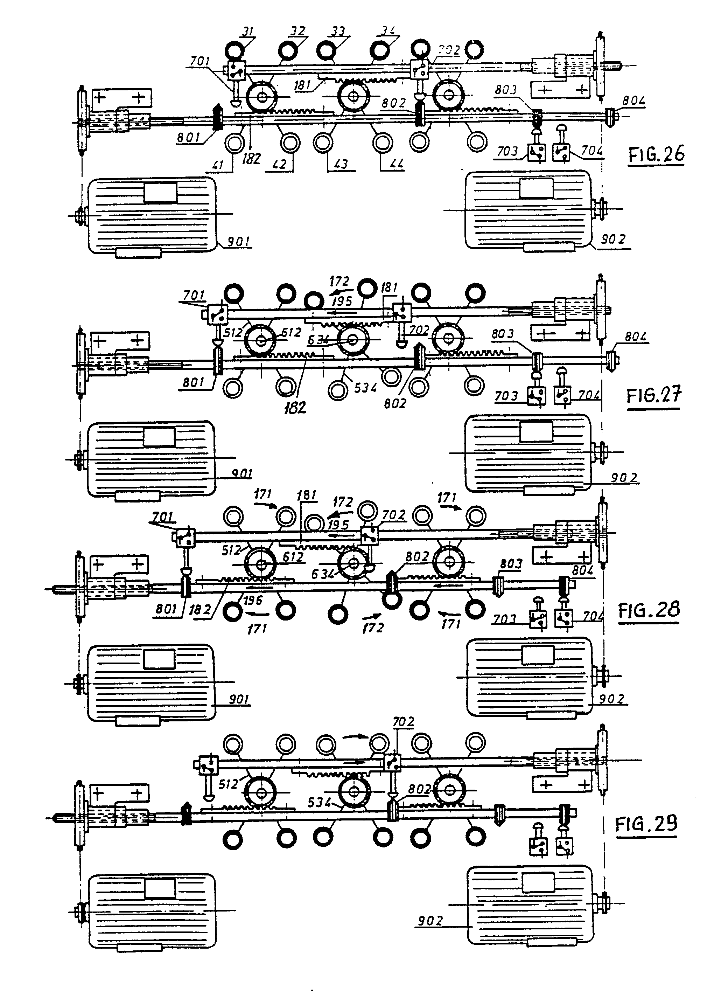

Les figures 26 à 29 montrent les moyens provoquant le déphasage entre le déplacement des crémaillères de rang pair et les crémaillères de rang impair.

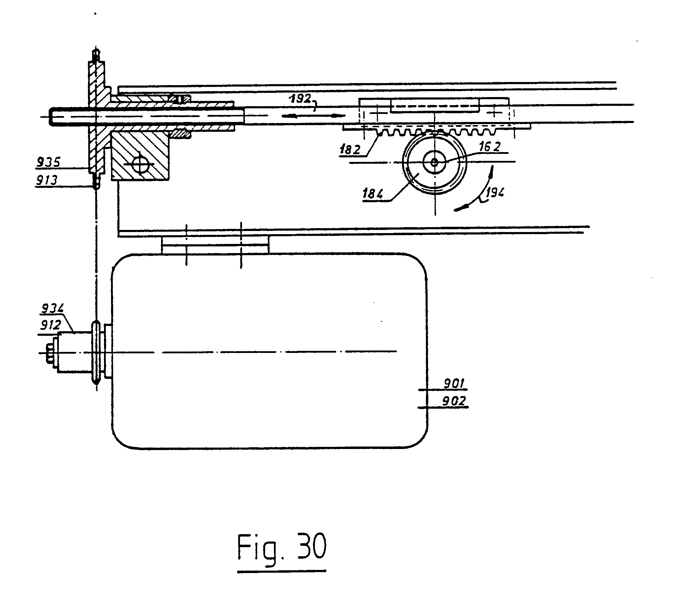

La figure 30 montre un exemple de réalisation des moyens faisant déplacer les crémaillères.

Les figures 14 à 19 montrent en élévation un système composé de 10 positions de filage :

11-12-13-14 représentent les broches correspondantes,

21-22-23-24 représentent les brochettes correspondantes,

31-32-33-34 représentent les bobines pleines correspondantes,

41-42-43-44 représentent les tubes vides correspondants,

512-513 représentent les dispositifs quadruples correspondant aux deux premières positions de filage d'une part et d'autre part aux deux suivantes.

Sur la figure 14, les dispositifs quadruples se trouvent au-dessus des bobines pleines et des tubes vides.

Sur la figure 15, les dispositifs quadruples sont descendus au niveau des bobines et des tubes : les quatre pinces du dispositif quadruple 512 saisissent respectivement les bobines 31 et 32 et les tubes vides 41 et 42.

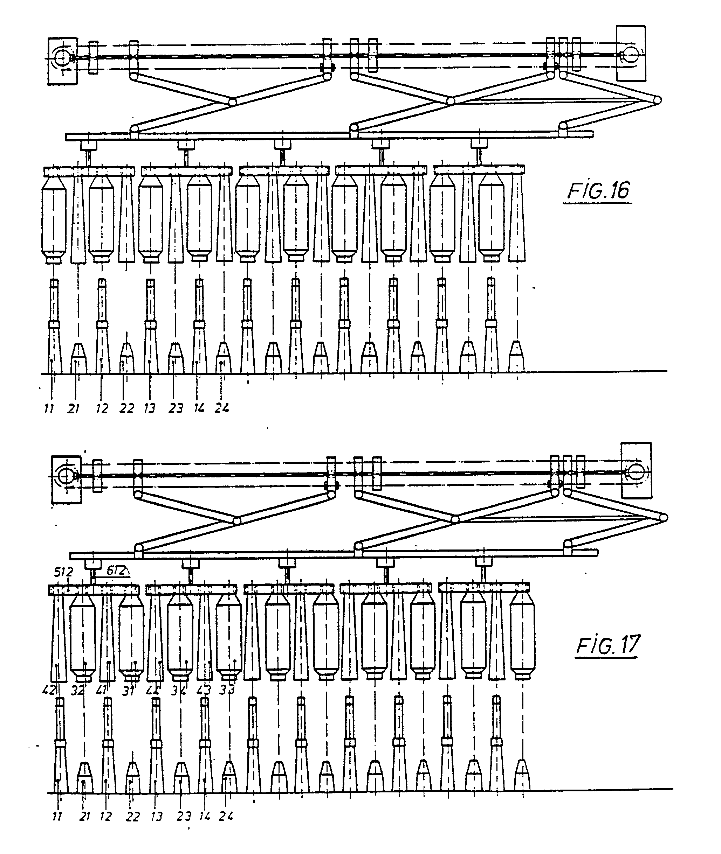

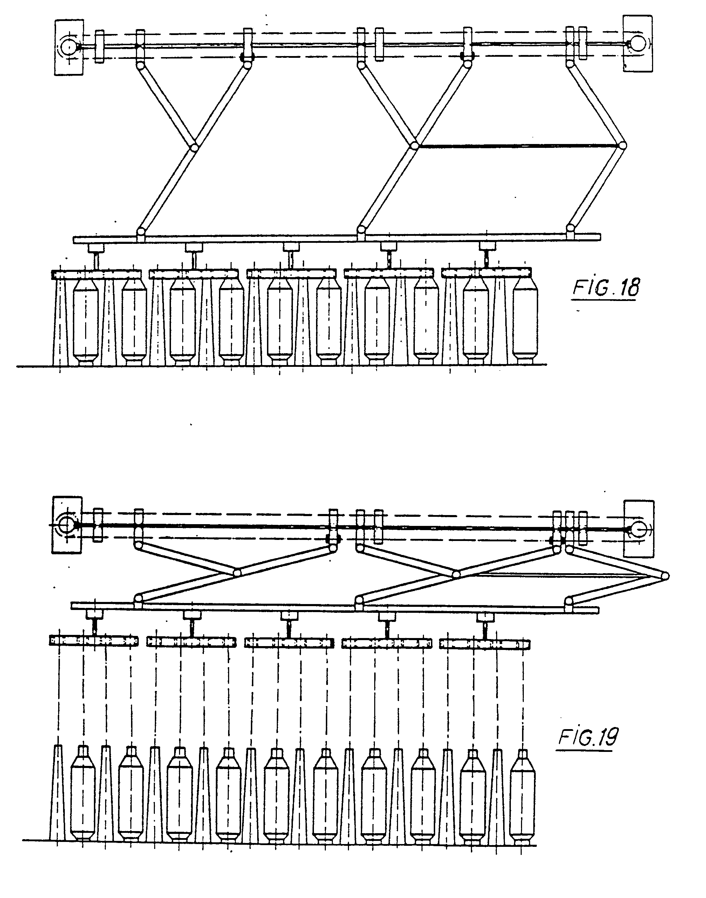

Sur la figure 16, les dispositifs quadruples sont remontés en position haute ; les bobines pleines 31 et 32 ont été dégagées de leurs broches 11 et 12 et les tubes vides 41 et 42 ont été dégagés de leurs brochettes 21 et 22.

Sur la figure 17, les dispositifs quadruples ont tourné de 180 degrés autour de leur axe : par exemple le dispositif 512 a tourné autour de son axe 612.

Sur la figure 18, les dispositifs quadruples sont redescendus au niveau des broches et des brochettes, les bobines pleines ont été enfilées sur les brochettes et les tubes vides sur les broches.

Sur la figure 19, les dispositifs quadruples sont remontés en position haute et, après avoir subi une rotation inverse de 180 degrés, sont prêts pour une opération suivante.

Les figures 20 à 24 montrent la rotation qui se produit entre les figures 17 et 18 ; les vues A en élévation et les vues B en plan.

Sur la figure 20, les dispositifs quadruples 512 et 534 ont saisi les bobines 31 à 34 et les tubes 41 à 44.

Sur la figure 21, les dispositifs quadruples de rang pair, dont le dispositif 534, ont commencé leur rotation dans le sens de la flèche 72, les dispositifs de rang impair étant toujours immobiles.

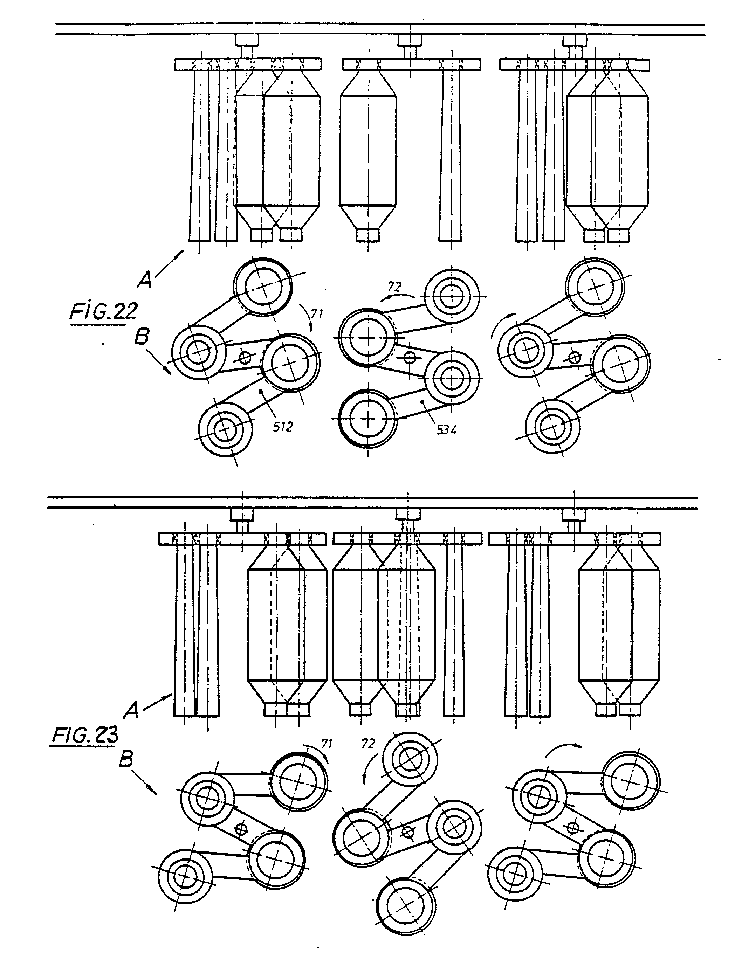

Sur la figure 22, les dispositifs de rang pair poursuivent leur rotation dans le sens de la flèche 72, alors que les dispositifs de rang impair ont entamé une rotation de sens opposé suivant la flèche 71.

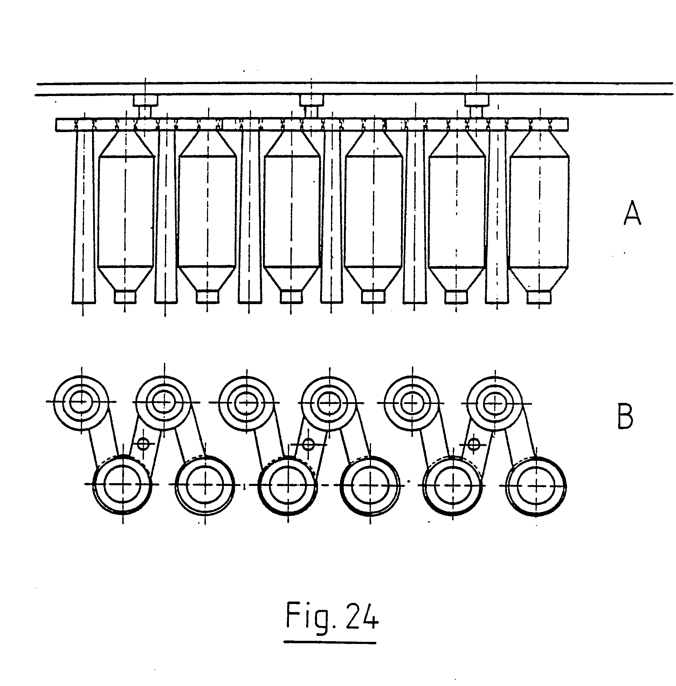

Sur la figure 23, les mouvements décrits ci-dessus se poursuivent.

Sur la figure 24, les rotations sont terminées, la rotation des dispositifs impairs s'étant terminée avant celle des dispositifs pairs. Les bobines pleines ont pris la place des tubes vides, et inversement. La bobine 31 a pris la place du tube vide 42, et inversement ; la bobine 32 a pris la place du tube 41, et inversement, et ainsi de suite.

On voit que la combinaison de l'inversion des sens de rotation et du déphasage des rotations a pour effet que jamais les bobines pleines et les tubes vides de deux dispositifs quadruples adjacents ne sont entrés en contact.

Sans la combinaison de ces deux caractéristiques du système, des collisions entre bobines et tubes seraient inévitables. Si on se réfère à la figure 20B, on imagine très bien en effet que, si les dispositifs quadruples 512 et 534 tournaient dans le même sens et sans déphasage, la bobine 33 et le tube 42 entreraient directement en contact.

La figure 25 montre le système par lequel est obtenue la rotation des dispositifs quadruples. Pour chaque dispositif quadruple de rang pair, une crémaillère telle que 182 se déplace par des moyens non représentés dans le sens de la flèche 192 et engrène avec un pignon tel que 184 solidaire de l'axe 162 du dispositif quadruple, de façon à faire tourner le dispositif dans le sens de la flèche 194. Pour chaque dispositif quadruple de rang impair, une crémaillère telle que 181 se déplace par des moyens non représentés dans le sens de la flèche 191 et engrène avec un pignon tel que 183 solidaire de l'axe 161 du dispositif quadruple, de façon à faire tourner le dispositif dans le sens de la flèche 193.

Les moyens provoquant le déplacement des crémaillères de rang pair et de rang impair sont agencés de telle façon que les crémaillères de rang impair se déplacent avec un certain retard sur les crémaillères de rang pair, de façon à créer dans les rotations le déphasage qui a été expliqué plus haut.

La figure 26 montre les dispositifs quadruples en position de prise des tubes et des bobines. Cette figure montre les systèmes de fin de course (appelés dans la suite contacteurs) et tâteurs utilisés :

- contacteurs 701-702 placés sur la barre qui porte la crémaillère 81
- contacteurs 703-704 placés sur une partie fixe
- tâteurs 801-802-803-804 placés sur la barre qui porte la crémaillère 82.

La commande de déplacement des barres de crémaillère se fait par l'intermédiaire des moteurs 901 et 902 comme expliqué figure 30.

Au départ les prises quadruples paires et impaires sont en position telle que le contacteur 702 qui contrôle le positionnement des prises quadruples paires et le contacteur 703 qui contrôle le positionnement des prises quadruples impaires soient respectivement sur les tâteurs 802 et 803.

La figure 27 montre que le moteur 902 démarre le premier et fait déplacer la crémaillère 181 dans le sens de la flèche 195 de manière que l'axe 634 tourne dans le sens de la flèche 172 d'une portion de tour, et cela jusqu'à ce que le switch 701 entre en contact avec le tâteur 801, ce qui arrête alors le moteur 902. La prise quadruple 534 a alors pris par rapport à la prise quadruple 512 un déphasage correspondant à cette portion de tour.

Le moteur 901 démarre alors et fait avancer la crémaillère 182 dans le sens de la flèche 196 de manière que l'axe 612 tourne dans le sens de la flèche 171 et cela jusqu'à ce que le tâteur 804 entre en contact avec le switch 704. Le contacteur 703 et le tâteur 803 ne sont plus en contact.

Le contacteur 701 est alors relâché et le moteur 902 se remet en marche jusqu'à ce que ce switch revienne en contact avec le tâteur 801.

La valeur de la rotation entre le contact contacteur 703 — tâteur 803 et le contact contacteur 704 — tâteur 804 correspond à un demi-tour.

La figure 28 montre que lorsque le contacteur 704 est entré en contact avec le tâteur 804 et que le contacteur 701 est revenu en contact avec le tâteur 801, les axes 634 des prises quadruples paires 534 ont accompli un demi-tour, plus la valeur du déphasage, alors que les axes 612 des prises quadruples impaires 512 n'ont accompli qu'un demi-tour.

La figure 29 montre que le moteur 902 redémarre alors dans le sens inverse, pour annuler le déphasage, et cela jusqu'à ce que le contacteur 702 entre en contact avec le tâteur 802. A ce moment tous les systèmes ont fait un demi-tour et les bobines et les tubes sont lâchés par les prises quadruples.

Le retour des prises quadruples en position initiale se fait par les manœuvres inverses de celles qui viennent d'être décrites.

La figure 30 montre le moyen réalisé pour faire avancer ou reculer les barres qui portent les crémaillères 181 et 182.

Les moteurs 901 et 902 tournent dans un sens soit horlogique soit antihorlogique, les rochets 912 et 934 commandent les rochets 913 et 935. Ceux-ci ont un alésage fileté qui reçoit les barres, qui portent les crémaillères 181 et 182 dont l'extrémité est filetée également.

Les rochets 913 et 935 étant immobilisés axialement, les barres qui portent les crémaillères 181 et 182 se déplacent axialement suivant le pas du filet soit dans un sens soit dans le sens contraire (flèche 192).

## Revendications

1. Procédé pour le remplacement des bobines pleines (31-34) se trouvant sur les broches (11-14) d'un métier continu à filer par des tubes (41-44) se trouvant sur des brochettes fixes (21-24) placées à proximité des broches, en saisissant les bobines pleines et les tubes vides et en les déplaçant verticalement suivant l'axe des broches, caractérisé en ce que la bobine pleine (31) et le tube vide (41) correspondant à une même position de filage sont enlevés simultanément, respectivement de la broche (11) et de la brochette (21), puis sont permutés par rotation et enfin sont replacés simultanément, respectivement sur la brochette (21) et sur la broche (11).

2. Procédé suivant la revendication 1 caractérisé en ce que les bobines pleines (31, 32) et les tubes vides (41, 42) de deux positions de filage consécutives sont enlevés simultanément, respectivement des broches (11, 12) et des brochettes (21, 22), puis sont permutés par rotation et enfin sont replacés simultanément, respectivement sur les brochettes (21, 22) et sur les broches (11, 12).

3. Appareillage pour le remplacement des bobines pleines (31-34) se trouvant sur les broches (11-14) d'un métier continu à filer, par des tubes vides (41-44) se trouvant sur des brochettes fixes (21-24) placées à proximité des broches (11-14) comportant des moyens (90-94) permettant de saisir les bobines pleines et les tubes vides et de les déplacer verticalement suivant l'axe des broches caractérisé en ce que ces moyens (90-94) permettent l'enlèvement simultané de la bobine pleine (31) et du tube vide (41) correspondant à une même position de filage, la permutation de ladite bobine et dudit tube par rotation d'un demi-tour autour d'un axe vertical (612) et le replacement dudit tube et de ladite bobine sur leur broche et brochette respectives.

4. Appareillage suivant la revendication 3 caractérisé en ce que les moyens (90-94) ayant servi à retirer la bobine pleine (31) et le tube vide (41), respectivement de la broche (11) et de la brochette (21) d'une même position de filage (1) et ayant réalisé la permutation entre la bobine pleine et le tube vide de cette position de filage, subissent une translation d'un écartement le long de l'axe longitudinal de la machine et se trouvent alors dans la position pour effectuer la permutation de la bobine pleine et du tube vide de la position de filage suivante (2).

5. Appareillage suivant la revendication 3, caractérisé en ce que les moyens d'enlèvement (90-94) comprennent un dispositif à pinces dit « dispositif quadruple » qui est prévu pour chaque groupe de deux positions de filage (une position impaire et la position paire qui la suit) et en ce qu'un tel dispositif à pinces comporte donc quatre pinces distinctes, la première pour prendre la bobine pleine de la position de filage impaire, la deuxième pour prendre le tube vide de la position de filage impaire, la troisième pour prendre la bobine pleine de la position de filage paire et la quatrième pour prendre le tube vide de la position de filage paire.

6. Appareillage suivant la revendication 5, caractérisé en ce que les moyens (90-94) ayant servi à retirer les bobines pleines (31, 32) et les tubes vides (41, 42), respectivement des broches (11-14) et des brochettes (21-24) de deux positions de filage consécutives, subissent une rotation d'un demi-tour autour d'un axe vertical (612) passant par le centre du parallélogramme délimité par les points d'intersection avec un plan horizontal des axes des deux broches (11, 12) et des deux brochettes (21, 22), considérées, de telle façon que les bobines pleines se trouvent à la place des tubes vides par une permutation exacte et inversement, et que les bobines pleines et les tubes vides puissent être replacés respectivement sur les brochettes et les broches.

7. Appareillage suivant la revendication 6, caractérisé en ce que les moyens de rang pair ayant servi à retirer les bobines pleines et les tubes vides respectivement des broches (11, 12) et des brochettes (21, 22), de deux positions de filage consécutives, subissent une rotation d'un demi-tour dans le sens inverse de la rotation des moyens correspondants de rang pair, de façon à éviter des collisions entre bobines et tubes.

8. Appareillage suivant la revendication 7, caractérisé en ce que les moyens de rang impair ayant servi à retirer les bobines pleines et les tubes vides respectivement des broches (11, 12) et des brochettes (21, 22), de deux positions de filage consécutives, subissent une rotation d'un demi-tour avec un certain déphasage angulaire par rapport aux moyens correspondants de rang pair, de façon à éviter des collisions entre bobines et tubes.

9. Appareillage suivant l'une quelconque des revendications 3-8, caractérisé en ce que pour provoquer la rotation des dispositifs quadruples on prévoit pour chaque dispositif quadruple de rang pair une crémaillère (182) qui se déplace dans un sens de translation et engrène avec un pignon (184) solidaire de l'axe (162) du dispositif quadruple de façon à faire tourner le dispositif dans un sens et en ce que pour chaque dispositif quadruple de rang impair, une crémaillère (181) se déplace dans un sens de translation inverse et engrène avec un pignon (183) solidaire de l'axe (161) du dispositif quadruple correspondant de façon à faire tourner le dispositif en sens inverse.

10. Appareillage suivant la revendication 9, caractérisé en ce que les moyens provoquant le déplacement des crémaillères de rang pair et de rang impair sont agencés de telle façon que les crémaillères (181) de rang impair se déplacent avec un certain retard par rapport aux crémaillères (182) de rang pair de façon à créer le déphasage dans les rotations.

## Claims

1. A method for replacing full bobbins (31-34), located on the spindles (11-14) of a continuous spinning machine, by tubes (41-44) located on fixed pegs (21-24) disposed adjacent to the spindles, comprising gripping the full bobbins and the empty tubes and moving them vertically with respect to the axes of the spindles, characterised in that the full bobbin (31) and the empty tube (41) corresponding to one spinning station are lifted simultaneously, from the spindle (11) and from the peg (21) respectively, their relative positions are then reversed by rotation, and they are finally re-positioned simultaneously, on the peg (21) and on the spindle (11) respectively.

2. A method according to Claim 1, characterised in that the full bobbins (31, 32) and the empty tubes (41, 42) at two consecutive spinning stations are raised simultaneously from the spindles (11, 12) and from the pegs (21, 22) respectively, their relative positions are then reversed by rotation, and they are finally re-positioned simultaneously, on the pegs (21, 22) and on the spindles (11, 12) respectively.

3. Apparatus for replacing full bobbins (31-34) located on the spindles (11-14) of a continuous spinning machine, with empty tubes (41-44) located on fixed pegs (21-24) which are disposed close to the spindles (11-14), comprising means (90-94) to permit the full bobbins and the empty tubes to be gripped and moved vertically with respect to the axes of the spindles, characterised in that the said means (90-94) permit the simultaneous raising of the full bobbin (31) and of the empty tube (41) corresponding to one spinning station, reversal of the relative positions of the said bobbin and the said tube by rotation through a half turn about a vertical axis (612), and repositioning of the said tube and bobbin respectively on the spindle and the peg.

4. Apparatus according to Claim 3, characterised in that the said means (90-94), after having served to withdraw the full bobbin (31) and the empty tube (41) from the spindle (11) and from the peg (21), respectively, of one spinning station (1), and after carrying out the reversal of the relative positions of the full bobbin and the empty tube at that spinning station, undergo a lateral movement through one pitch along the longitudinal axis of the machine so as to be in position for carrying out the exchange of the full bobbin and the empty tube at the next following spinning station (2).

5. Apparatus according to Claim 3, characterised in that the lifting means (90-94) comprise a gripping device of the kind known as a « quadruple device », which is provided at each group of two spinning stations (one station in an odd position and the next following station in an even position), and that such a gripping device then comprises four distinct grippers, namely a first gripper for taking the full bobbin from the odd spinning station, a second gripper for taking the empty tube from the odd spinning station, a third grippper for taking the full bobbin from the even spinning station, and a fourth gripper for taking the empty tube from the even spinning station.

6. Apparatus according to Claim 5, characterised in that the lifting means (90-94), after having served to withdraw the full bobbins (31, 32) and the empty tubes (41, 42), from the spindles (11-14) and from the pegs (21-24) of two consecutive spinning stations, undergo rotation, through a half turn about a vertical axis (612) extending through the centre of the parallelogram defined by the points of intersection, with a horizontal plane, of the axes of the two spindles (11, 12) and of the two pegs (21, 22) in question, in such a manner that the full bobbins take the place of the empty tubes by means of a precise exchange of their relative positions, and vice versa ; and that the full bobbins and the empty tubes can be repositioned respectively on the pegs and on the spindles.

7. Apparatus according to Claim 6, characterised in that the lifting means in even positions, after having served to withdraw the full bobbins and the empty tubes from the spindles (11, 12) and from the pegs (21, 22) respectively, at two consecutive spinning stations, undergo a rotation through a half turn in the opposite sense to the corresponding means in even positions, whereby to avoid collisions between bobbins and tubes.

8. Apparatus according to Claim 7, characterised in that the lifting means in odd positions, after having served to withdraw the full bobbins and the empty tubes from the spindles (11, 12) and from the pegs (21, 22), respectively, at two consecutive spinning stations, undergo a rotation through a half turn together with a predetermined angular displacement with respect to the corresponding means in even positions, whereby to avoid collisions between bobbins and tubes.

9. Apparatus according to any one of Claims 3 to 8, characterised in that, for causing the rotation of the quadruple devices, there is provided for each quaduple device in an even position a rack (182), which is moveable linearly and which engages a pinion (184) secured on the axis (162) of the quadruple device, whereby to rotate the device in one sense, and that, for each quadruple device in an odd position, a rack (181), moveable linearly in an opposite direction, engages a pinion (183) secured on the axis (161) of the corresponding quadruple device, whereby to rotate the device in the opposite sense.

10. Apparatus according to Claim 9, characterised in that the means for causing the racks of the even positions and the racks of the odd positions to move are arranged in such a manner that the racks (181) of the odd positions are moved in retard of the racks (182) of the even positions by a predetermined amount, whereby to effect the angular displacement in the rotations.

## Patentansprüche

1. Verfahren zum Ersetzen von vollen Spulen (31-34), die sich auf den Spindeln (11-14) einer Stetigspinnmaschine befinden, durch Rohre (41-44), die sich auf den festen Aufsteckspindeln (21-24) befinden, welche in der Nähe der Spindeln angeordnet sind, indem die vollen Spulen und die leeren Rohre ergriffen und indem sie vertikal gemäß der Achse der Spindeln verlagert werden, dadurch gekennzeichnet, daß die volle Spule (31) und das leere Rohr (41), welche einer gleichen Position des Spinnens entsprechen, gleichzeitig von der Spindel (11) bzw. dem Dorn (21) abgehoben werden, danach durch Drehung vertauscht werden und schließlich gleichzeitig auf die Aufsteckspindel (21) bzw. auf die Spindel (11) aufgesetzt werden.

2. Verfahren nach Anspruch 1, dadurch gekennzeichnet, daß die vollen Spulen (31, 32) und die leeren Rohre (41, 42) von zwei aufeinanderfolgenden Positionen des Spinnens gleichzeitig von den Spindeln (11, 12) bzw. den Aufsteckspindeln (21, 22) abgehoben werden, danach durch Drehung vertauscht werden und schließlich gleichzeitig auf die Aufsteckspindeln (21, 22) bzw. auf die Spindeln (11, 12) aufgesetzt werden.

3. Einrichtung zum Ersetzen von vollen Spulen (31-34), die sich auf den Spindeln (11-14) einer Stetigspinnmaschine befinden, durch leere Rohre (41-44), die sich auf den festen Aufsteckspindeln (21-24) befinden, welche in der Nähe der Spindeln (11-14) angeordnet sind, umfassend Mittel (90-94), welche es gestatten, die vollen Spulen und die leeren Rohre zu ergreifen und sie vertikal gemäß der Achse der Spindeln zu verlagern, dadurch gekennzeichnet, daß diese Mittel (90-94) das gleichzeitige Abheben der vollen Spule (31) und des leeren Rohrs (41), die einer gleichen Position des Spinnens entsprechen, das Vertauschen dieser Spule und dieses Rohrs durch Drehung um eine Halbumdrehung um eine vertikale Achse (612) und das Wiederaufsetzen dieses Rohrs und dieser Spule auf seine Spindel bzw. ihre Aufsteckspindel gestatten.

4. Einrichtung nach Anspruch 3, dadurch gekennzeichnet, daß die Mittel (90-94), welche dazu gedient haben, die volle Spule (31) und das leere Rohr (41) von der Spindel (11) bzw. der Aufsteckspindel (21) einer gleichen Position des Spinnens (1) abzuziehen, und die das Vertauschen zwischen der vollen Spule und dem leeren Rohr dieser Position des Spinnens ausgeführt haben, eine Verschiebung um eine Entfernung längs der Längsachse der Maschine erfahren und sich dann in der Position zum Bewirken des Vertauschens der vollen Spule und des leeren Rohrs in der folgenden Position des Spinnens (2) befinden.

5. Einrichtung nach Anspruch 3, dadurch gekennzeichnet, daß die Mittel zum Abheben (90-94) eine Klemmeneinrichtung, genannt « Quadrupeleinrichtung », umfassen, die für jede Gruppe von zwei Positionen des Spinnens vorgesehen ist (eine ungerade Position und eine gerade Position, die ihr folgt), und daß eine solche Klemmeneinrichtung folglich vier getrennte Klemmen umfaßt, die erste zum Aufnehmen der vollen Spule der ungeraden Position des Spinnens, die zweite zum Aufnehmen des leeren Rohrs der ungeraden Position des Spinnens, die dritte zum Aufnehmen der vollen Spule der geraden Position des Spinnens und die vierte zum Aufnehmen des leeren Rohrs der geraden Position des Spinnens.

6. Einrichtung nach Anspruch 5, dadurch gekennzeichnet, daß die Mittel (90-94), die dazu gedient haben, die vollen Spulen (31, 32) und die leeren Rohre (41, 42) von den Spindeln (11-14) bzw. den Austeckspindeln (21-24) der beiden aufeinanderfolgenden Positionen des Spinnens abzuziehen, eine Rotation um eine Halbumdrehung um eine vertikale Achse (612) erfahren, die durch die Mitte eines Parallelogramms hindurchgeht, welches von den Schnittpunkten der Achsen der beiden Spindeln (11, 12) und der beiden Aufsteckspindeln (21, 22), die in Betracht stehen, mit einer Horizontalebene abgesteckt wird in der Weise, daß sich die vollen Spulen durch eine genaue Vertauschung an dem Platz der leeren Rohre befinden, und umgekehrt, und daß die vollen Spulen und die leeren Rohre wieder auf die Aufsteckspindeln bzw. die Spindeln aufgesetzt werden können.

7. Einrichtung nach Anspruch 6, dadurch gekennzeichnet, daß die Mittel der geraden Rangstufe, die dazu gedient haben, die vollen Spulen und die leeren Rohre von den Spindeln (11, 12) bzw. den Aufsteckspindeln (21, 22) von zwei aufeinanderfolgenden Positionen des Spinnens abzuziehen, eine Drehung um eine Halbumdrehung in dem zur Drehung der entsprechenden Mittel der geraden Rangstufe umgekehrten Sinn erfahren, und zwar in der Weise, daß Kollisionen zwischen Spulen und Rohren vermieden werden.

8. Einrichtung nach Anspruch 7, dadurch gekennzeichnet, daß die Mittel der ungeraden Rangstufe, die dazu gedient haben, die vollen Spulen und die leeren Rohre von den Spindeln (11, 12) bzw. den Aufsteckspindeln (21, 22) der beiden aufeinanderfolgenden Position des Spinnens abzuziehen, eine Rotation um eine Halbumdrehung mit einer gewissen Winkelphasenverschiebung bezüglich den entsprechenden Mitteln der geraden Rangstufe erfahren, und zwar in der Weise, daß Kollisionen zwischen Spulen und Rohren vermieden werden.

9. Einrichtung nach irgendeinem der Ansprüche 3 bis 8, dadurch gekennzeichnet, daß man zum Bewirken der Drehung der Quadrupeleinrichtungen für jede Quadrupeleinrichtung der geraden Rangstufe eine Zahnstange (182) vorsieht, die sich in einem Verschiebungssinn verlagert und mit einem Ritzel (184) kämmt, das fest mit der Achse (162) der Quadrupeleinrichtung verbunden ist, derart, daß die Einrichtung in einem Sinn gedreht wird, und dadurch, daß sich für jede Quadrupeleinrichtung von ungerader Rangstufe eine Zahnstange (181) in einem umgekehrten Verschiebungssinn verlagert und mit einem Ritzel (183) kämmt, das mit der Achse (161) der entsprechenden Quadrupeleinrichtung fest verbunden ist, derart, daß die Einrichtung im umgekehrten Sinn gedreht wird.

10. Einrichtung nach Anspruch 9, dadurch gekennzeichnet, daß die Mittel, welche die Verlagerung der Zahnstangen vom geraden Rang und vom ungeraden Rang bewirken, in der Weise angeordnet sind, daß sich die Zahnstangen (181) von ungerader Rangfolge mit einer gewissen Nacheilung bezüglich den Stangstangen (182) von gerader Rangstufe verlagern, derart, daß die Phasenverschiebung in den Drehungen erzeugt wird.

FIG. 1

FIG. 2

FIG. 3

FIG. 4

FIG. 5

FIG. 6

FIG. 7

FIG. 8

FIG. 9

FIG. 10

FIG. 13

FIG. 11

FIG. 12

0 143 770

*FIG.14*

31 41 32 42 33 43 34 44

*FIG.15*

0 143 770

*FIG.16*

11  21  12  22  13  23  14  24

*FIG.17*

11  21  12  22  13  23  14  24

8

FIG.18

FIG.19

9

FIG.20

31   32   33   34

512   534

41   42   43   44

A
B

FIG.21

A
B

71   72

512   612   634

534

10

FIG.22

FIG.23

A

B

Fig. 24

Fig. 25

FIG.26

FIG.27

FIG.28

FIG.29

Fig. 30